# EUROPÄISCHE PATENTANMELDUNG

(11) **EP 0 521 495 A2**
(43) Veröffentlichungstag der Anmeldung: **07.01.1993**
(21) Anmeldenummer: 92111183.7
(22) Anmeldetag: 02.07.1992
(51) Int. Cl.: B01D 63/02, B29C 67/18

(54) **Verfahren und Vorrichtung zum Herstellen von Hohlfadenmodulen**

(30) Priorität: 05.07.1991 DE 4122341; 29.11.1991 DE 4139308
(71) Anmelder: Akzo Nobel N.V., NL-6824 BM Arnhem (NL)
(72) Erfinder: Wollbeck, Rudolf, W-8765 Erlenbach (DE); Zang, Thomas, W-8758 Goldbach (DE); Baurmeister, Ulrich, Dr., W-5600 Wuppertal 1 (DE); König, Alfred, Dr., W-8751 Elsenfeld (DE); Schulz, Günter, Dr., W-6400 Fulda (DE); Tretzel, Joachim, Dr., W-6104 Seeheim Jugenheim (DE)
(74) Vertreter: Fett, Günter

(57) **Zusammenfassung**

Verfahren und Vorrichtung zum Herstellen von Hohlfadenmodulen (21), bei welchen die Hohlfäden (2) in Schichten angeordnet sind, die im wesentlichen senkrecht zur Modullängsachse (10) verlaufen, und die Hohlfadenenden (22) am Modulumfang angeordnet sind, durch Anordnen eines Hohlfadenpaketes (1) in einer Gießform (3) und Einbetten der Hohlfadenendbereiche in eine zunächst fließfähige später hart werdende Vergußmasse (2) durch Drehen des Hohlfadenpaketes um seine Längsachse (10), wobei erfindungsgemäß die Längsachse (Drehachse) des Hohlfadenpaketes im wesentlichen horizontal angeordnet wird, sowie Vorrichtung zur Stoffübertragung von einem Gas auf eine Flüssigkeit oder umgekehrt mittels geradlinig ausgebildeter Hohlfäden (1), bei welcher das Gas durch den Innenhohlraum der Hohlfäden strömt und die Endbereiche der Hohlfäden in einem Vergußmassekörper (2) mit ringförmigem Querschnitt eingebettet sind.

## Beschreibung

Die Erfindung betrifft ein Verfahren zum Herstellen von Hohlfadenmodulen, bei welchen die Hohlfäden in Schichten, d.h. in im wesentlichen äquidistant zueinander verlaufenden Flächen, insbesondere in im wesentlichen parallel zueinander verlaufenden Ebenen angeordnet sind, die Hohlfäden jeder Fläche bzw. Ebene, also jeder Schicht, im wesentlichen parallel zueinander und zumindest zum Teil in gegenseitigen Abständen angeordnet sind, die Hohlfadenenden am Umfang der Flächen bzw. Ebenen angeordnet sind, die Hohlfäden benachbarter Flächen bzw. Ebenen (Schichten) sich kreuzen und die Flächen bzw. Ebenen (Schichten) im wesentlichen senkrecht zur Längsachse des Moduls angeordnet sind, durch Anordnen einer Vielzahl von Hohlfadenschichten übereinander oder nebeneinander zur Bildung eines Hohlfadenpaketes und Einbetten der Hohlfadenendbereiche in eine zunächst fließfähige später hart werdende Einbettmasse durch Drehen des Hohlfadenpaketes um seine Längsachse, eine Vorrichtung zum Durchführen des Verfahrens sowie einen nach dem Verfahren bzw. mit der Vorrichtung herstellbaren Hohlfadenstoffaustauscher.

Hohlfadenmodule der genannten Art sind bekannt, so beispielsweise aus der DE 38 23 858 A1, der DE 38 39 567 A1 und der DE 40 05 132 A1. Das Einbetten der Hohlfadenendbereiche erfolgte bei solchen Hohlfadenmodulen bisher durch Einschleudern, d.h. durch sehr schnelles Drehen (Zentrifugieren) der Hohlfadenpakete um ihre senkrecht angeordnete Längsachse. Während des Einbettens befand sich das Hohlfadenpaket in einer topfähnlichen Ummantelung, die die äußere Begrenzung des sich bildenden Einbettmassekörpers bildete. Um bei diesem Verfahren die Einbettmasse über die gesamte Modulhöhe zu verteilen, waren hohe Drehzahlen erforderlich, die häufig zu einer Verlagerung der Hohlfäden in den einzelnen Schichten und damit zu einer nicht unbeträchtlichen Zerstörung der ursprünglich gleichmäßigen Verteilung und geordneten Anordnung der Hohlfäden in den Hohlfadenpaksten führte.

Trotz hoher Drehzahl versucht die zunächst fließfähige Einbettmasse jedoch der Schwerkraft folgend auch nach unten zu fließen, so daß bei diesem Verfahren in den unteren Schichten die Hohlfadenendbereiche auf einer größeren Länge eingebettet werden als in den oberen Schichten, d.h. die Einbettlänge war bisher ungleichmäßig und, um in den oberen Schichten die erforderliche Mindesteinbettlänge zu erreichen, mußte in den unteren Schichten eine an sich unnötig große Einbettlänge in Kauf genommen werden. Dies bedeutete einen Mehrverbrauch an Einbettmasse und eine Reduzierung der wirksamen, also nicht eingebetteten, freien Hohlfadenlänge.

Als weiterer Nachteil kam hinzu, daß im wesentlichen nur scheibenförmige Module bzw. nur Module deren Höhe (Länge) ungefähr dem Moduldurchmesser entsprach, hergestellt werden konnten. Bei einer darüber hinausgehenden Hohlfadenpakethöhe (-länge) bildet die Einbettmasse nämlich selbst bei sehr hohen Drehzahlen einen Paraboloid, was dazu führt, daß die Hohlfäden in den unteren Schichten gänzlich eingebettet werden und die Einbettlänge nur in den oberen Schichten das gewünschte Maß erreicht. Die Herstellung beliebig langer Hohlfadenmodule der hier in Rede stehenden Art war mit diesem bekannten Verfahren daher überhaupt nicht möglich. Zur Herstellung sehr langer Hohlfadenmodule mußten daher zunächst mehrere kürzere, beispielsweise ringförmige, Module hergestellt werden und diese dann zu Modulen mit der gewünschten wesentlich größeren Länge zusammengesetzt werden, wobei noch eine Abdichtung zwischen den einzelnen, kürzeren Modulen erforderlich war.

Der vorliegenden Erfindung lag daher die Aufgabe zugrunde, ein Verfahren zum Herstellen von Hohlfadenmodulen zur Verfügung zu stellen, bei welchem die Hohlfadenendbereiche von Hohlfadenpaketen der einleitend beschriebenen Art mit beliebiger, ggf. mehrere Meter betragender, Länge (Höhe) in einem einzigen Verfahrensschritt und auch bei verhältnismäßig geringen Drehzahlen eingebettet werden können und bei welchem zudem erreicht werden kann, daß die Einbettlänge der Hohlfadenendbereiche sowohl in Umfangsrichtung als auch in Längsrichtung betrachtet im wesentlichen gleich ist und bei Hohlfadenpaketen mit rundem Querschnitt im Längsschnitt des Vergußmassekörpers betrachtet eine sehr gleichmäßige Wandstärke des Vergußmassekörpers und somit ein Strömungskanal mit einem in seiner Längsrichtung im wesentlichen gleichbleibenden Querschnitt erreicht werden, eine hierzu geeignete Vorrichtung sowie einen verbesserten Hohlfadenstoffaustauscher.

Diese Aufgabe wurde bei dem eingangs beschriebenen Verfahren erfindungsgemäß dadurch gelöst, daß die Längsachse um die das Hohlfadenpaket während des Einbringens und bis zum Erhärten der Einbettmasse gedreht wird, also die Drehachse des Hohlfadenpaketes, im wesentlichen horizontal angeordnet wird.

Vorzugsweise wird das Hohlfadenpaket vor dem Einbringen der Einbettmasse in einer den Abmessungen des Hohlfadenpaketes entsprechend bemessenen Einbettform (Gießform) angeordnet. In vorteilhafter Weiterbildung des Verfahrens wird die Einbettmasse im Umfangsbereich des Hohlfadenpaketes eingebracht. Bei Verwendung einer Einbettform (Gießform) ist diese vorzugsweise mit Kanälen versehen, durch welche die Einbettmasse eingebracht wird. Die Einbettmasse kann an einer Stirnseite des Hohlfadenpaketes eingebracht werden. Sie verteilt sich dann während der Drehung des Hohlfadenpaketes gleichmäßig über dessen gesamte Länge und gesamten Umfang. Bei verhältnismäßig langen Hohlfadenmodulen kann die Einbettmasse auch an einer oder mehreren gleichmäßig über die Hohlfadenmodullänge verteilt angeordneten Stellen eingebracht werden, so daß sie nicht wie beim stirnseitigen Einbringen über die gesamte Hohlfadenmodullänge zu fließen braucht.

Das erfindungsgemäße Verfahren gestattet es auch, zwei oder mehr Hohlfadenpakete, die beispielsweise durch Trennplatten voneinander getrennt gehalten werden, auf einer gemeinsamen Drehachse anzuordnen und auf diese Weise zwei bzw. mehrere Hohlfadenmodule in einem Arbeitsgang gleichzeitig herzustellen.

Das erfindungsgemäße Verfahren gestattet es darüber hinaus, Hohlfadenmodule mit beliebig großer Querschnittsfläche, bei rundem Querschnitt also mit beliebig großem Durchmesser, und beliebiger Länge herzustellen. Auch der Durchmesser und die Wandstärke der zum Herstellen von Hohlfadenmodulen nach dem erfindungsgemäßen Verfahren geeigneten Hohlfäden unterliegen an sich keinen Beschränkungen, und es können sowohl poröse als auch nichtporöse Hohlfäden nach dem erfindungsgemäßen Verfahren zu Hohlfadenmodulen verarbeitet werden. Je nach Art der verwendeten Hohlfäden können somit Hohlfadenmodule hergestellt werden, die sich beispielsweise zum Filtrieren von gasförmigen oder flüssigen Dispersionen (einschließlich der Ultra- und Mikrofiltration), zur Gastrennung, auch Gasseparation genannt, zur Be- oder Entgasung von Flüssigkeiten, zur Pervaporation, zur umgekehrten Osmose oder dergleichen eignen.

Die Hohlfadenschichten, aus denen die Hohlfadenpakete gebildet werden, sind in der Regel ebenflächig, sie können jedoch beispielsweise auch gekrümmt, kugelkalottenförmig oder anders ausgebildet sein. Die aus den Hohlfadenschichten gebildeten Hohlfadenpakete können einen runden Querschnitt, genauso gut aber auch einen rechteckigen, quadratischen oder anders geformten Querschnitt aufweisen.

Hohlfadenpakete mit ebenen Hohlfadenschichten erhält man beispielsweise wie in der DE 40 05 132 A1 beschrieben.

Gekrümmte Hohlfadenschichten erhält man beispielsweise durch folgende Verfahrensschritte: Aufwickeln wenigstens eines Hohlfadens in mehreren Schichten (Lagen) auf eine rotierende Trommel mit rundem Querschnitt, wobei die Windungen jeder Schicht die Windungen der benachbarten Schichten kreuzen (in Art einer Kreuzspule), Bilden eines aus einer beliebigen, vorgegebenen Anzahl von Hohlfadenschichten (Hohlfadenlagen) bestehenden Wickelkörpers, Anhalten der Wickeltrommel nach Erreichen der gewünschten Anzahl von Hohlfadenschichten (Hohlfadenlagen) bzw. einer vorgegebenen Bewicklungsstärke und Heraustrennen von Segmenten mit rundem, rechteckigem, quadratischem oder anders geformtem Querschnitt und Übereinander- bzw. Nebeneinanderanordnen der herausgetrennten Segmente zur Bildung von Hohlfadenpaketen. Ein Hohlfadenpaket mit kugelkalottenförmig ausgebildeten Hohlfadenschichten kann beispielsweise durch Ablage von ebenflächigen oder gekrümmten Hohlfadenschichten bzw. Segmenten auf einer kugelkalottenförmig ausgebildeten starren Stützplatte hergestellt werden.

Die Vorteile des erfindungsgemäßen Verfahrens werden deutlich, wenn man sich vor Augen hält, daß es damit erstmals gelang, beispielsweise ungefähr 50 Millionen Hohlfäden eines Hohlfadenmoduls in einem einzigen Verfahrensschritt, also gleichzeitig, in einer Gießharzlösung einzubetten und dabei die Hohlfäden in ihrer Lage genau zu fixieren. Die Hohlfäden waren zu diesem Zweck zuvor paketweise in einer Gießform montiert und durch den Gießformmantel sowie einen oberen und unteren Abschlußdeckel in ihrer Lage fixiert worden. Ein Überlauf an der Gießform ermöglichte dabei die genaue Einhaltung der gewünschten Einbettlänge der Hohlfadenendbereiche und damit die genaue Einhaltung eines gießharzfreien, inneren Durchmessers des Hohlfadenmoduls. Nachdem das als Einbettmasse wirkende eingebrachte Gießharz die erforderliche Festigkeit erreicht hatte, konnte der Hohlfadenmodul entformt werden, da nunmehr das hart gewordene Gießharz die Lagefixierung der Hohlfäden übernahm. Anschließend wurde - wie dies aus dem Stand der Technik bekannt - am äußeren Umfang des Hohlfadenmoduls so viel des Gießharzes abgetragen, beispielsweise auf einer Drehmaschine, bis die beiden offenen Enden jedes Hohlfadens freigelegt waren, so daß nunmehr jeder Hohlfaden des Hohlfadenmoduls von seinem einen Ende zu seinem anderen Ende durchströmt werden konnte. Der Einbau eines solchen Hohlfadenmoduls in ein entsprechend bemessenes Gehäuse mit Anschlüssen für das Zu- und Abführen der mit dem Hohlfadenmodul zu behandelnden bzw. behandelten Fluide sowie Dichtungen zur Bildung von Verteiler- bzw. Sammelkammern innerhalb des Gehäuses für diese Fluide mit den genannten Anschlüssen ist im Stand der Technik ebenfalls bekannt und braucht daher hier nicht näher erläutert zu werden.

Das erfindungsgemäße Verfahren eignet sich sowohl zum Einbetten der Hohlfadenendbereiche von Hohlfadenpaketen mit einem polygonalen, beispielsweise rechteckigen, quadratischen, sechseckigen usw., als auch mit einem runden Querschnitt. Wird bei einem Hohlfadenpaket mit polygonalem Querschnitt ein Durchströmungskanal mit einem ähnlichen Querschnitt und damit eine im wesentlichen gleiche Einbettlänge der Hohlfadenendbereiche gewünscht, so können die Seiten des Hohlfadenpakets nacheinander eingebettet werden, indem zunächst die Hohlfadenendbereiche der ersten Seite des Hohlfadenpakets eingebettet werden, das Hohlfadenpaket nach Erhärten der Vergußmasse um seine Längsachse soweit gedreht wird, bis die nächste Seite des Hohlfadenpakets in die Einbettposition gebracht ist usw., bis alle Hohlfadenendbereiche auf allen Seiten des Hohlfadenpakets eingebettet sind.

Wird dagegen ein Durchströmungskanal mit rundem Querschnitt gewünscht, so wird das Hohlfadenpaket zum Einbetten der Hohlfadenendbereiche vorzugsweise in eine entsprechend bemessene und ausgebildete Form, also in eine Form mit rechteckigem, quadratischem, sechseckigem, rundem usw. Querschnitt gebracht und während oder nach dem Einbringen der Vergußmasse in Drehung um seine erfindungsgemäß horizontal angeordnete Längsachse versetzt, und zwar so lange, bis die Vergußmasse erhärtet ist. Auf diese Weise wird ein Durchströmungskanal mit einem im wesentlichen kreisrunden Querschnitt und mit einem in Längsrichtung im wesentlichen gleichbleibenden Querschnitt erreicht. Bei Hohlfadenpaketen mit rundem Querschnitt wird somit eine sehr gleichmäßige Wandstärke des Vergußmassekörpers erreicht und es ist mit dem erfindungsgemäßen Verfahren erstmals möglich, dabei eine Abmessungskonstanz mit einer Abweichung von ≦ + 1% zu erzielen.

Das erfindungsgemäße Verfahren gestattet ein druck- und fluiddichtes Einbetten der Endbereiche selbst mehrerer Millionen Hohlfäden in einem einzigen Verfahrensschritt, wobei durch Erhöhung der Drehzahl während des Einbettens ein Vergußmassekörper ohne Lunker und Blasen hergestellt werden kann.

Die erfindungsgemäße Vorrichtung zum Durchführen des Verfahrens besteht aus einer Zuführeinrichtung zum Zuführen der Vergußmasse und einer Gießform zur Aufnahme wenigstens eines Hohlfadenpaketes, wobei die Gießform aus einem Mantel und zwei Stirnplatten gebildet wird, von denen wenigstens eine Stirnplatte abnehmbar ist und wenigstens eine Stirnplatte im Bereich des inneren Umfangs des Mantels wenigstens eine Öffnung zum Zuführen der Vergußmasse und wenigstens eine Stirnplatte eine Entlüftungsöffnung aufweist, bei welcher die Gießform um ihre Längsachse drehbar und mit einer Antriebseinrichtung antreibbar angeordnet und die Längsachse (Drehachse) im wesentlichen horizontal angeordnet ist.

Ausgestaltungsformen der Vorrichtung sind in den Figuren dargestellt und nachfolgend wie auch in den Patentansprüchen beschrieben.

Der erfindungsgemäße Hohlfadenstoffaustauscher ist eine Vorrichtung zur Stoffübertragung von einem gasförmigen Medium auf ein flüssiges Medium und/oder umgekehrt durch die gasdurchlässige Wand von Hohlfäden, bei welcher das gasförmige Medium die Hohlfäden innen durchströmt und das flüssige Medium die Hohlfäden außen umströmt und die Endbereiche der Hohlfäden in einem Vergußmassekörper eingebettet sind, der eine fluiddichte Trennwand zwischen dem gasförmigen und dem flüssigen Medium bildet.

Eine Vorrichtung dieser Art ist bekannt, so beispielsweise aus der DE-A-37 33 542.

Bei der erfindungsgemäßen Vorrichtung ist der Vergußmassekörper ring- oder rohrförmig ausgebildet und bildet den Durchströmungskanal für das flüssige Medium, wobei die Hohlfäden innerhalb dieses Durchströmungskanals in im wesentlichen parallel zueinander liegenden Ebenen angeordnet sind, die im wesentlichen senkrecht zur Durchströmungsrichtung, d.h. zur Längsachse des Durchströmungskanals, liegen, die Hohlfäden jeder Ebene im wesentlichen geradlinig ausgebildet und parallel zueinander und zumindest zum Teil in Abständen voneinander angeordnet sind, die Hohlfäden benachbarter Ebenen sich kreuzen und die an ihren beiden Enden offenen Hohlfäden auf der äußeren Mantelfläche (Umfangsfläche) des Vergußmassekörpers ausmünden.

Die für die Vorrichtung geeigneten Hohlfäden, die häufig auch als Hohlfasern, Kapillaren, Röhrchen, dünnwandige Schläuche oder ähnlich bezeichnet werden, können eine poröse, insbesondere mikroporöse, oder nichtporöse Wand aufweisen; sie werden dann als poröse, mikroparöse bzw. nichtporöse Hohlfäden bezeichnet.

Gasdurchlässig bedeutet, daß die Wand der Hohlfäden zumindest dann eine für den angestrebten Erfolg ausreichende Gasmenge hindurchtreten läßt, wenn sich auf der anderen Seite der Hohlfadenwand eine Flüssigkeit befindet, die das Gas aufnimmt. Derartige Hohlfäden sind an sich bekannt. Dies gilt auch für die zweckmäßigen Abmessungen des Durchmessers und der Wanddicke der Hohlfäden sowie für die geeigneten Werkstoffe, in der Regel Polymere oder cellulosische Werkstoffe, aus denen die Hohlfäden bestehen.

Hohlfäden, deren Wand für Stoffe ganz oder teilweise durchlässig, also permeabel oder semipermeabel, ist, und die sich demzufolge zur Stoffübertragung und/oder zum Stoffaustausch eignen, werden häufig auch als Kapillarmembranen bezeichnet. Kapillarmembranen können im medizinischen oder technischen Bereich eingesetzt werden. Die für die Vorrichtung geeigneten Hohlfäden können an der Außen- und/oder Innenfläche und/oder ggf. in den Poren ihrer Wand immobilisierte bioaktive Substanzen, Zellen, Proteine oder dgl. aufweisen. Sie können auch andere adsorptive Eigenschaften haben. Ein typisches Einsatzgebiet für Kapillarmembranen ist beispielsweise die Oxygenation.

Stoffübertragung im Sinne der vorliegenden Erfindung umfaßt auch den Stoffaustausch, bei dem gleichzeitig eine Stoffübertragung von dem gasförmigen Medium auf das flüssige Medium und umgekehrt erfolgt.

Unter gasförmigem Medium werden reine Gase und Gasgemische (z.B. Luft) verstanden, die auch Dampf (z.B. Wasserdampf) und andere Stoffe enthalten können.

Unter flüssigem Medium werden reine Flüssigkeiten und Flüssigkeitsgemische verstanden, die auch gelöste Stoffe (z.B. Salze), gelöste Gase (z.B. Sauerstoff, Stickstoff, Kohlendioxid usw.), aber auch nichtgelöste (z.B. suspendierte) anorganische und/oder organische Stoffe (z.B. Enyzme, Fermente usw.), Kleinstlebewesen (z.B. Bakterien), immobilisierte bioaktive Substanzen, Zellen, Proteine oder dgl. und anderes enthalten können.

Die Hohlfäden können in Form wenigstens einer Hohlfadenmatte oder mehrerer Hohlfadenmattenelemente vorliegen, wobei die Hohlfäden beispielsweise durch maschenbildende Kettfäden eingebunden und miteinander verbunden sein können, wie in der Offenlegungsschrift DE 38 39 567 A1 beschrieben. Sie können auch als gewebtes Hohlfadenband, insbesondere als doppelschüssiges Hohlfadenband, oder als Ab- oder Ausschnitte eines solchen Hohlfadenbandes vorliegen, bei welchem die Hohlfäden die Kettfäden sind, die durch Schußfäden gehalten werden, wie in der deutschen Patentanmeldung P 40 04 797.0-26 beschrieben. Das Anordnen der Hohlfäden zur Herstellung der Vorrichtung kann in bevorzugter Weise wie in der deutschen Patentanmeldung P 40 05 132.3-44 beschrieben erfolgen. Das Anordnen der Hohlfäden zur Herstellung der Vorrichtung kann mit Vorteil aber auch durch das gleichzeitige mäanderförmige Ablegen von einem oder zwei gewebten oder gewirkten Hohlfadenbändern erfolgen, welches bei textilen Stoffbahnen auch als Abtafeln bezeichnet wird, so wie es in der bereits genannten DE 38 39 567 A1 bzw. deutschen Patentanmeldung P 40 04 797.0-26 beschrieben wird. In weiterer Ausgestaltung kann eine Hohlfadenmatte bzw. ein Hohlfadenband auch um einen flachen ggf. perforierten Kern oder kernlos um eine durch entfernbare Elemente (z.B. Stäbe) gebildete Ebene gewickelt werden.

Wie bei den gattungsgemäßen Vorrichtungen sind auch bei der erfindungsgemäßen Vorrichtung die Hohlfäden mit dem Vergußmassekörper in einem entsprechend bemessenen Gehäuse mit den notwendigen Abdichtungen und den Anschlüssen für das Zu- und Abführen der an der Stoffübertragung teilnehmenden Medien angeordnet. Je nach Verwendungszweck können die Hohlfäden mit dem Vergußmassekörper die Form einer Scheibe oder eines länglichen Zylinders haben. Als vorteilhaft hat sich für das Verhältnis von Länge (Höhe) des Vergußmassekörper zu hydraulischem Innendurchmesser des Durchströmungskanals ein Bereich von 0,3 bis 100 erwiesen, wobei der hydraulische Innendurchmesser vorzugsweise im Bereich von 10 mm bis 300 mm liegt. Der hydraulische Durchmesser des Durchströmungskanals ist definiert als das Verhältnis von 4F : U, wobei F die Querschnittsfläche ohne Hohlfäden und U der Umfang des Strömungskanals bedeutet. Der tatsächliche freie Querschnitt des Durchströmungskanals ist jedoch durch die sich darin befindlichen Hohlfäden kleiner als F. Dieser bestimmt sich nach dem Füllgrad ε, wobei ε = 0,1 bis 0,8 betragen kann, d.h. 10% bis 80% von F können mit Hohlfäden belegt sein.

Die Vorrichtung gemäß der Erfindung wird vorzugsweise als Blutoxygenator, aber auch als Bioreaktor verwendet. Sie ist jedoch nicht nur für diese Verwendungszwecke geeignet, da sie neben anderen insbesondere folgende Vorteile bietet: Da die Hohlfäden von dem flüssigen Medium quer, das heißt im wesentlichen senkrecht zu ihrer Längsachse angeströmt und umströmt werden, findet beim Durchströmen des Durchströmungskanals eine gute Durchmischung im flüssigen Medium statt, welche zu einer erhöhten Stoffübertragung führt. Darüber hinaus erfordert die Vorrichtung einen wesentlich geringeren Herstellungsaufwand als die bisher bekannten Hohlfadenstoffaustauscher.

Der Querschnitt des Hohlfadenpaketes (Hohlfäden mit Vergußmassekörper) kann beispielsweise rund oder rechteckig, der des Durchströmungskanals ebenfalls rund oder rechteckig ausgebildet sein, aber auch jede andere beliebige Form haben, beispielsweise die eines Parallelogramms, insbesondere einer Raute.

In besonderer Ausgestaltungsform hat das Hohlfadenpaket einen rechteckigen, insbesondere quadratischen, Querschnitt, der Durchströmungskanal dagegen einen runden Querschnitt. Bei einem Hohlfadenpaket mit quadratischem Querschnitt können die Hohlfäden so angeordnet sein, daß sich die Hohlfäden benachbarter Ebenen im wesentlichen im rechten Winkel (90°) kreuzen und die Hohlfäden jeweils im wesentlichen parallel zu den Seiten des Vergußmassekörpers verlaufen, an denen ihre beiden offenen Enden nicht ausmünden. Alle Hohlfäden sind hierbei im wesentlichen gleich lang, sie sind bei dieser Ausgestaltungsform in jeder einzelnen Ebene betrachtet aber in einem unterschiedlich langen Endbereich eingegossen und weisen somit unterschiedlich lange, für die Stoffübertragung wirksame Abschnitte, also Bereiche, in denen die Hohlfäden nicht eingegossen sind, auf. Wegen der gleichen Länge der Hohlfäden aber ist der Strömungswiderstand in allen Hohlfäden beim Durchströmen mit einem gasförmigen Medium im wesentlichen gleich, was zu einer sehr gleichmäßigen Beaufschlagung aller Hohlfäden mit gasförmigem Medium führt und damit zu einer Verbesserung der Stoffübertragung.

Mit einem runden Querschnitt des Durchströmungskanals wird in vorteilhafter Weise gegenüber einem rechteckigen wie auch quadratischen Querschnitt desselben eine gleichmäßigere Strömungsverteilung im Durchströmungskanal und damit eine gleichmäßigere Umströmung der Hohlfäden mit flüssigem Medium erreicht.

Bei einem Durchströmungskanal mit rechteckigem Querschnitt ist es wiederum möglich, die rechteckige Form des Durchströmungskanals der rechteckigen Form des Hohlfadenpakets in der Weise anzupassen, daß der Vergußmassekörper auf allen vier Seiten eine im wesentlichen gleiche Wandstärke aufweist und somit die eingebetteten Endbereiche aller Hohlfäden im wesentlichen gleich kurz sind. Auf diese Weise erhöht sich die für die Stoffübertragung wirksame Hohlfadenlänge. Dies führt zu einer Erhöhung der Stoffübertragung und kann von Vorteil sein, wenn sich das in den Ecken ggf. länger verweilende flüssige Medium trotz der längeren Verweilzeit nicht in einer störenden Art und Weise verändert oder andere Nachteile zur Folge hat.

Diese zuvor beschriebene Ausgestaltungsform kann erreicht werden, indem alle vier Seiten des Hohlfadenpakets nacheinander eingegossen werden. Dies kann in vorteilhafter Weise durch Einschleudern in einer Zentrifuge bei exzentrischer Anordnung des Hohlfadenpaketes oder dadurch erreicht werden, daß die Längsachse des Hohlfadenpakets, die der Längsachse des Durchströmungskanals entspricht, in eine horizontale Lage gebracht wird, die erste Seite des Hohlfadenpakets in dieser Lage eingebettet wird, das Hohlfadenpaket nach Erhärten der Vergußmasse um seine Längsachse um 90° gedreht wird, danach die zweite Seite des Hohlfadenpakets eingebettet wird usw. bis alle vier Seiten auf diese Weise eingebettet sind.

Wird dagegen ein Durchströmungskanal mit runden Querschnitt gewünscht, so kann das Hohlfadenpaket zum Einbetten der Hohlfadenendbereiche in eine entsprechende Form mit rundem, rechteckigem, quadratischem usw. Querschnitt gebracht und während oder nach dem Einbringen der Vergußmasse in Drehung um seine vorzugsweise in eine horizontale Lage gebrachte Längsachse gebracht werden, bis die Vergußmasse erhärtet ist. Bevorzugt wird hierzu eine Zentrifuge mit horizontal liegender Schleuderachse eingesetzt. Auf diese Weise wird im Längsschnitt des Vergußmassekörpers betrachtet eine sehr gleichmäßige Wandstärke des Vergußmassekörpers und somit ein Strömungskanal mit einem in seiner Längsrichtung im wesentlichen gleichbleibenden Querschnitt erreicht, und zwar ist es möglich, dabei eine Abmessungskonstanz mit einer Abweichung von kleiner gleich ± 1% zu erzielen.

Häufig bevorzugt werden wegen anderer Vorteile Hohlfadenstoffaustauscher, bei denen das Hohlfadenpaket einen runden Querschnitt und der hierzu koaxial angeordnete Durchströmungskanal ebenfalls einen runden Querschnitt aufweisen. Hierbei haben die Hohlfäden jeder Ebene sowohl unterschiedliche absolute als auch unterschiedliche für die Stoffübertragung wirksame Längen. Das bedeutet, ein kurzer Hohlfaden hat auch eine kleinere für die Stoffübertragung wirksame Länge als ein längerer Hohlfaden, jener hat jedoch wegen seiner kleineren Länge einen geringeren Strömungswiderstand. Die Folge davon ist, daß durch die kürzeren Hohlfäden zwar mehr gasförmiges Medium als durch die längeren Hohlfäden fließt, daß dies aufgrund der geringeren wirksamen Länge jedoch nicht zu einer entsprechend höheren Stoffübertragung führen muß. Dies kann je nach den an der Stoffübertragung beteiligten Medien jedoch auch anders sein.

Bei einem Hohlfadenpaket mit rechteckigem Querschnitt und einer Anordnung der Hohlfäden wie oben beschrieben, können auch zwei unterschiedliche Arten von Hohlfäden abwechselnd angeordnet sein, so daß Hohlfäden in unmittelbar benachbarten Ebenen nicht derselben Art angehören, beispielsweise hydrophile und hydrophobe Hohlfäden, Hohlfäden mit unterschiedlicher Leistung (Performance) usw. Es ist hierbei auch möglich, in einer Ebene Hohlfäden zur Stoffübertragung anzuordnen und in der jeweils nächsten Ebene beispielsweise Hohlfäden zur Wärmeübertragung vorzusehen. Es ist jedoch auch möglich, auf diese Weise zwei unterschiedliche Arten von Hohlfäden vorzusehen, die zu einer unterschiedlichen Stoffübertragung benutzt werden. Beispielsweise kann die eine Art der Hohlfäden auch zur Stoffübertragung von einem durch die Hohlfäden strömenden flüssigen Medium auf das die Hohlfäden außen umströmende flüssige Medium und/oder umgekehrt benutzt werden. Zu diesem Zweck braucht der ringförmige Außenraum der Vorrichtung nur in vier Kammern unterteilt zu werden, um auf diese Weise für jedes der beiden durch die Hohlfäden strömenden Medien eine Verteiler- und eine Sammelkammer zu erhalten.

Bei dieser zuletzt beschriebenen Ausführungsform kann ein nichtquadratischer rechteckiger Querschnitt des Hohlfadenpakets von Vorteil sein, so daß die Hohlfäden der beiden unterschiedlichen Arten auch unterschiedliche Längen aufweisen. Dies kann von Vorteil sein, wenn für die eine Art der Stoff- oder Wärmeübertragung eine größere Hohlfadenlänge benötigt wird als für die andere Art. Hierbei weisen die Hohlfäden derselben Art jedoch im wesentlichen die gleiche Länge auf.

Unabhängig von der Querschnittsform des Hohlfadenpakets und des Strömungskanals führt die Anordnung der Hohlfäden bei der erfindungsgemäßen Vorrichtung zu einer äußerst gleichmäßigen Verteilung der Hohlfäden sowohl über den Querschnitt als auch in Längsrichtung des Strömungskanals.

Außer für die beanspruchte Art der Stoffübertragung ist die Vorrichtung auch für die ausschließliche Stoffübertragung von wenigstens einem durch die Hohlfäden strömenden flüssigen Medium auf ein die Hohlfäden außen umströmendes flüssiges Medium und/oder umgekehrt geeignet, insbesondere dann, wenn das wenigstens eine durch die Hohlfäden strömende flüssige Medium dazu geeignet ist, ein in dem die Hohlfäden außen umströmenden flüssigen Medium gelöstes Gas aufzunehmen und/oder ein in dem die Hohlfäden durchströmenden flüssigen Medium gelöstes Gas an das die Hohlfäden außen umströmende flüssige Medium abzugeben. Ebenso eignet sie sich für das Entlüften von Flüssigkeiten, also das Abscheiden von Luft- oder anderen Gasblasen aus Flüssigkeiten durch Hohlfäden, die eine hydrophobe poröse Wand haben.

Eine besonders bevorzugte, weil kompakte, Ausführungsform der Vorrichtung ergibt sich dann, wenn die Hohlfäden derart angeordnet sind, daß sich alle Hohlfäden aller benachbarten Ebenen berühren.

Die Erfindung wird nun anhand der Figuren 1 bis 16 näher erläutert, wobei Figur 1 das herkömmliche Verfahren veranschaulicht, während in den Figuren 2 bis 8 Ausführungsformen des erfindungsgemäßen Verfahrens und der erfindungsgemäßen Vorrichtung und in den Figuren 12 bis 16 Ausführungsformen des Stoffaustauschers dargestellt sind.

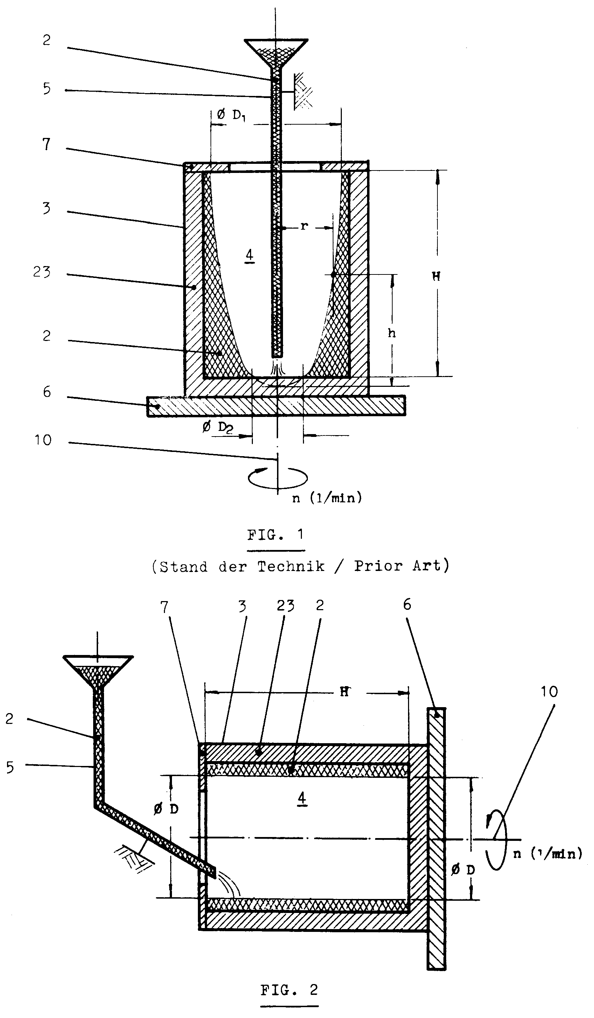

In den Figuren 1 bis 11 bezeichnen folgende Positionszahlen folgende Teile:
- 1 =: Hohlfäden; Hohlfadenpaket; Hohlfadenstapel
- 2 =: Vergußmasse; Vergußmassekörper
- 3 =: Gießform
- 4 =: Hohlraum; Durchströmungskanal
- 5 =: Einfülleitung
- 6 =: Feste Platte
- 7 =: Abnehmbare Platte
- 8 =: Entlüftungsöffnung
- 9 =: Einfüllöffnung
- 10 =: Längsachse; Drehachse
- 11 =: Innerer Deckel
- 12 =: Äußerer Deckel
- 13 =: Hohlraum; Verteilerkammer
- 14 =: Überlaufrand
- 15 =: Ringraum
- 16 =: Kanal
- 17 =: Trennfuge
- 18 =: Ringkanal
- 19 =: Zuführkanal
- 20 =: Hohlfadenmattensegment
- 21 =: Hohlfadenmodul
- 22 =: Hohlfadenenden
- 23 =: Mantel der Gießform

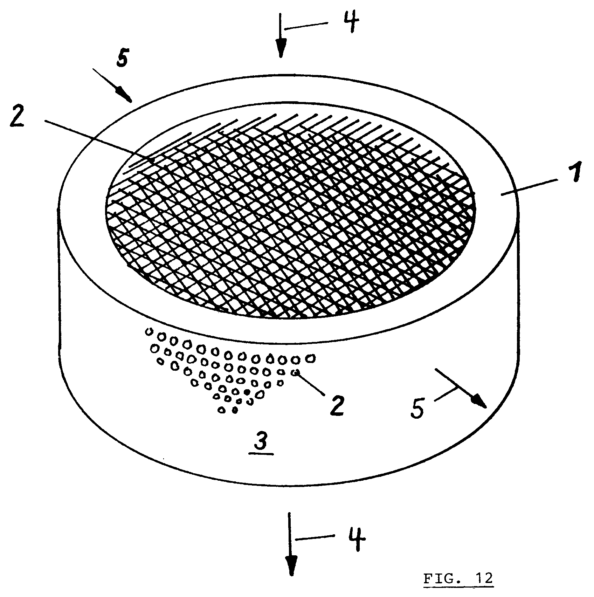

In den Figuren 12 bis 16 und in den Ansprüchen 15 bis 35 bezeichnen folgende Positionszahlen folgende Teile:
- 1: Vergußmassekörper
- 2: Hohlfaden; Hohlfäden
- 3: äußere Mantelfläche (Umfangsfläche) des Vergußmassekörpers 1
- 4: Durchströmungsrichtung für das flüssige Medium
- 5: Durchströmungsrichtung für das gasförmige Medium
- 6: Gehäuse
- 7: Einlaß für das gasförmige Medium
- 8: Verteilerkammer für das gasförmige Medium
- 9: Auslaß für das gasförmige Medium
- 10: Sammelkammer für das gasförmige Medium
- 11: Einlaß für das flüssige Medium
- 12: Verteilerkammer für das flüssige Medium
- 13: Auslaß für das flüssige Medium
- 14: Sammelkammer für das flüssige Medium
- 15: Dichtung
Die Antriebseinrichtung, mit welcher die Gießform 3 in Rotation gesetzt und gehalten wird, ist in keiner der Figuren dargestellt. In der Regel dient hierzu ein Elektromotor ggf. mit einem ggf. regelbaren Getriebe oder ein drehzahlsteuerbarer Elektromotor oder eine andere übliche Antriebseinrichtung.

Figur 1 zeigt die Ausbildung des Vergußmassekörpers 2 in einer Gießform 3 bei der bisher üblichen senkrechten Anordnung der Drehachse 10. Die durch die Einfülleitung 5 in die Gießform 3 eingebrachte Vergußmasse 2 nimmt auch bei hoher Drehzahl die Gestalt eines Hohlkörpers an, dessen Innenkontur dem oberen Teil eines Paraboloids entspricht.

Zur Vereinfachung wurden hierbei die einzübettenden Hohlfäden nicht dargestellt. Der Hohlraum 4 des Vergußmassekörpers 2 stellt beim fertigen Hohlfadenmodul den Durchströmungskanal dar. Wie Figur 1 deutlich zeigt, wird bei dem herkömmlichen Einbettverfahren ein Strömungskanal mit einem in seiner Längsrichtung sich ändernden Querschnitt erhalten, wobei der größte Querschnitt einen Durchmesser D₁ und der kleinste Querschnitt einen Durchmesser D₂ aufweist. Entsprechend unterschiedlich groß ist die Einbettlänge der Hohlfadenendbereiche in den unterschiedlichen Hohlfadenschichten, d.h. in den unteren Schichten, wo die Wandstärke des Vergußmassekörpers 2 relativ dick ist, ist auch die Einbettlänge entsprechend groß und in den oberen Schichten, wo die Wandstärke des Vergußmassekörpers 2 relativ dünn ist, ist auch die Einbettlänge entsprechend klein. Die für die Stoff- und oder Wärmeübertragung wirksame Länge der Hohlfäden ist nur der freie, also nicht eingebettete, Abschnitt jedes Hohlfadens. Man erkennt, daß bei dem herkömmlichen Einschleuderverfahren mit senkrecht angeordneter Drehachse also unvermeidbar ein wesentlich größerer Teil der Hohlfadenendbereiche eingebettet wird, als dies zur Erzielung einer druck- und fluiddichten Einbettung und eines stabilen Vergußmassekörpers 2 notwendig ist. Zudem wird bei dem herkömmlichen Verfahren ein an sich unnötig hoher Anteil Vergußmasse verbraucht. Wie die Figur 1 zeigt, können nach dem herkömmlichen Einschleuderverfahren zudem nur Hohlfadenmodule mit einer begrenzten Länge (H) hergestellt werden, was dazu führte, daß bisher sehr lange Module aus einer Vielzahl ringförmiger Einzelmodule zusammengesetzt werden mußten. Dabei mußte an den Stoßstellen zwischen zwei Einzelmodulen stets eine sprunghafte Querschnittsveränderung des Durchströmungskanals 4 in Kauf genommen werden, was zu Strömungsverlusten, Ausbildung von Wirbeln, Totwasserzonen usw. führte.

Figur 2 zeigt das erfindungsgemäße Verfahren in vereinfachter schematischer Darstellungsweise. Auch hierbei sind zur Vereinfachung die Hohlfäden nicht dargestellt. Die übrigen Teile entsprechen den in Figur 1 dargestellten und zuvor ausführlich beschriebenen, so daß sich eine Wiederholung deren Beschreibung hier erübrigt. Wie Figur 2 jedoch deutlich zeigt, wird durch das erfindungsgemäße Verfahren ein Strömungskanal 4 mit einem über seine gesamte Länge (H) gleichbleibenden Durchmesser (D) und damit gleichbleibenden Querschnitt erreicht. Das führt bei einem Hohlfadenpaket mit rundem Querschnitt zu einer in allen Schichten gleich großen Einbettlänge der Hohlfadenendbereiche, also zu einer über die gesamte Länge (H) des Vergußmassekörpers 2 gleichen Wandstärke des Vergußmassekörpers 2. Die wirksamen, also nicht eingebetteten, Hohlfadenabschnitte sind hierdurch ebenfalls in allen Schichten gleich groß, so daß bei einem gleich großen Hohlfadenpaket gegenüber dem herkömmlichen in Figur 1 dargestellten Einschleuderverfahren eine Vergrößerung der wirksamen Hohlfadenlänge und damit Hohlfadenfläche und eine Verringerung des Vergußmasseverbrauchs erreicht werden.

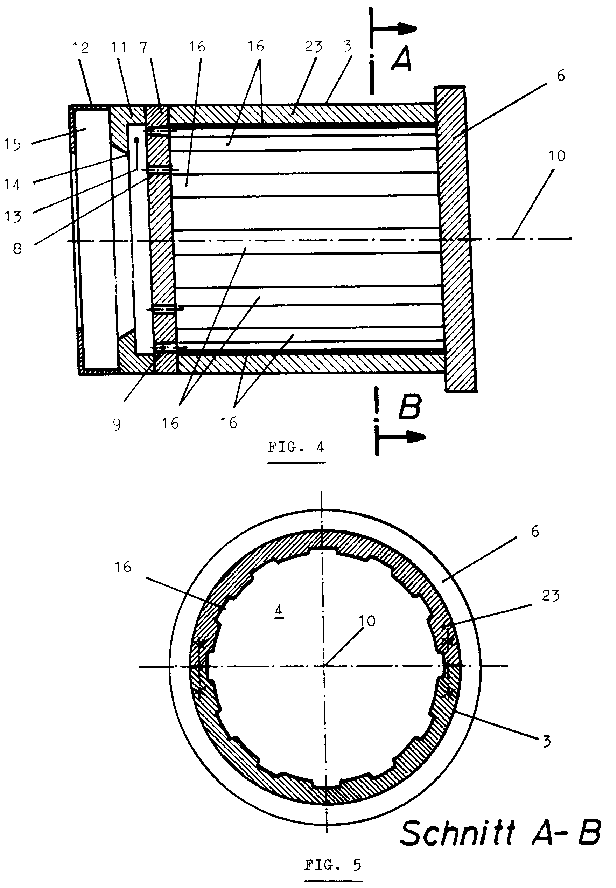

Zur Verdeutlichung des Verfahrens zeigt Figur 3 in vereinfachter schematischer Darstellungsweise eine Ausgestaltung einer Gießform 3 zur Durchführung des Verfahrens im Längsschnitt. Die Hohlfäden 1 sind hierbei in parallel zueinander verlaufenden Ebenen angeordnet, die rechtwinklig zur horizontal angeordneten Längsachse 10 verlaufen, so daß sich die Hohlfadenenden am äußeren Umfang des auf diese Weise gebildeten Hohlfadenpakets befinden. Die einzelnen Hohlfadenschichten können durch beispielsweise gewebte oder gewirkte Hohlfadenmattensegmente mit kreisrundem Querschnitt gebildet werden. Das Hohlfadenpaket 1 ist in der Gießform 3 angeordnet, wobei die Länge (H) der Gießform 3 durch die fest mit dem Mantel 23 der Gießform 3 verbundene Platte 6 und die abnehmbare Platte 7 mit den Entlüftungsöffnungen 8 und den Öffnungen 9 zum Weiterleiten der Vergußmasse 2 festgelegt wird. Den Abschluß bilden ein ringförmiger innerer Deckel 11 mit dem Überlaufrand 14 und ein ringförmiger äußerer Deckel 12. Die Einfülleitung 5 zum Zuführen der zunächst fließfähigen Vergußmasse 2 ragt bis in den durch den inneren Deckel 11 gebildeten ringförmigen Hohlraum 13. Während der Drehung der Gießform 3 mit allen darin und daran angeordneten Teilen gelangt die Vergußmasse 2 von der ortsfest angeordneten Einfülleitung 5 in den ringförmigen Hohlraum 13 und von dort durch die Einfüllöffnungen 9 in die Gießform 3. Dort legt sich die Vergußmasse 2 aufgrund der auf sie wirkenden Zentrifugalkraft an die Innenfläche des Mantels 23 der Gießform 3 an, wodurch die Endbereiche der Hohlfäden 1 eingebettet werden. Nach Erreichen der gewünschten Einbettlänge, also der gewünschten Wandstärke des Vergußmassekörpers 2 wird die Zufuhr von weiterer Vergußmasse 2 durch die Einfülleitung 5 beendet und der Einschleudervorgang solange fortgesetzt, bis die Vergußmasse 2 ausgehärtet (erstarrt) ist und einen festen Vergußmassekörper 2 bildet. Der Durchmesser des Überlaufrandes 14 im Deckel 11 kann dabei so bemessen werden, daß er dem Soll-Innendurchmesser des Vergußmassekörpers 2 entspricht. Überschüssige Vergußmasse 2 kann dann aus dem Hohlraum 13 in den von den Deckeln 11 und 12 gebildeten Ringraum 15 fließen. In Figur 3 ist die Situation nach Beendigung der Vergußmassezufuhr durch die Einfülleitung 5, also nach Erreichen der gewünschten Wandstärke des Vergußmassekörpers 2, dargestellt. Nach dem Festwerden der Vergußmasse 2 werden die Deckel 12 und 11 und die Platte 7 entfernt und der Rohmodul der Gießform 3 entnommen. Nunmehr kann am äußeren Umfang des Vergußmassekörpers 2 so viel der erhärteten Vergußmasse, beispielsweise auf einer Drehmaschine, abgetragen werden, bis die offenen Enden der Hohlfäden 1 freigelegt sind, so daß alle Hohlfäden des Hohlfadenmoduls von ihrem einen Ende zu ihrem anderen Ende frei durchströmt werden können. Der auf diese Weise gebildete Hohlfadenmodul kann nun in ein entsprechend bemessenes Gehäuse mit den Anschlüssen für das Zu- und Abführen der mit dem Hohlfadenmodul zu behandelnden bzw. behandelten Fluiden sowie den erforderlichen Dichtungen zur Bildung von Verteiler- bzw. Sammelkammern innerhalb des Gehäuses für diese Fluide eingebaut werden. Da sowohl das Freilegen der offenen Enden der Hohlfäden wie auch der Einbau und die Verwendung derartiger Hohlfadenmodule in Gehäusen zum Stand der Technik gehören, wird hier nicht näher darauf eingegangen.

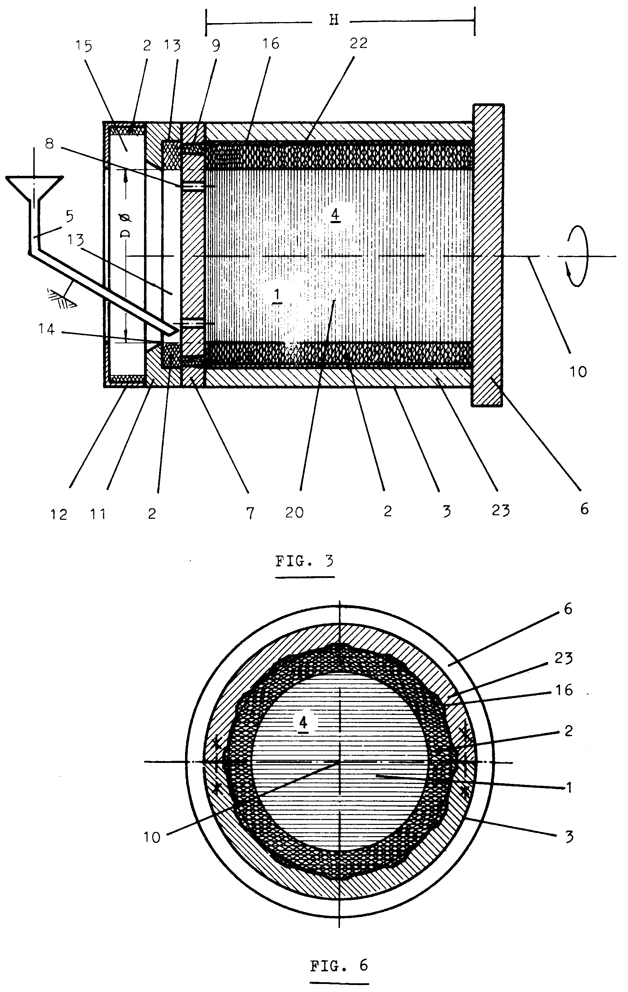

In den Figuren 4 und 5 ist eine vorteilhafte Ausgestaltungsform der Gießform 3 ohne die Einfülleitung (5) dargestellt, und zwar in Figur 4 im Längsschnitt und in Figur 5 im Querschnitt. Diese Gießform 3 weist an der Innenfläche ihres Mantels 23 mehrere am Innenumfang gleichmäßig verteilt angeordnete in Längsrichtung verlaufende nutenförmige Kanäle 16 auf. Diese erleichtern das Einbringen der Vergußmasse. Die Hohlfadenenden ragen nicht bis in diese Kanäle 16 hinein, sondern liegen mit ihren Enden an der Innenfläche der Gießform 3 an und werden auf diese Weise während des Einbettens in ihrer zentralen Lage gehalten. Beim Einschleudern der Hohlfadenendbereiche eines in die Gießform 3 eingelegten Hohlfadenpaketes strömt die Vergußmasse von den Einfüllöffnungen 9 zunächst in die Kanäle 16 und dringt von dort, also in radialer Richtung von außen nach innen, allmählich in das Hohlfadenpaket ein, d.h. in die Zwischenräume zwischen den Hohlfadenendbereichen, wodurch das Einbetten der Hohlfadenendbereiche und die Bildung eines rohrförmigen Vergußmassekörpers erfolgt. Die Einfüllöffnungen 9 können dabei so angeordnet sein, daß jeder Kanal 16 durch eine eigene Einfüllöffnung 9 mit Vergußmasse beaufschlagt wird.

In Figur 6 ist die Eingießform 3 nach den Figuren 4 und 5 mit einem darin fertig eingegossenen Hohlfadenpaket 1 im Querschnitt dargestellt. Zur Vereinfachung ist in Figur 6 nur eine Schicht der in gegenseitigen Abständen parallel zueinander verlaufenden Hohlfäden 1, deren Endbereiche in dem Vergußmassekörper 2 eingebettet sind, dargestellt.

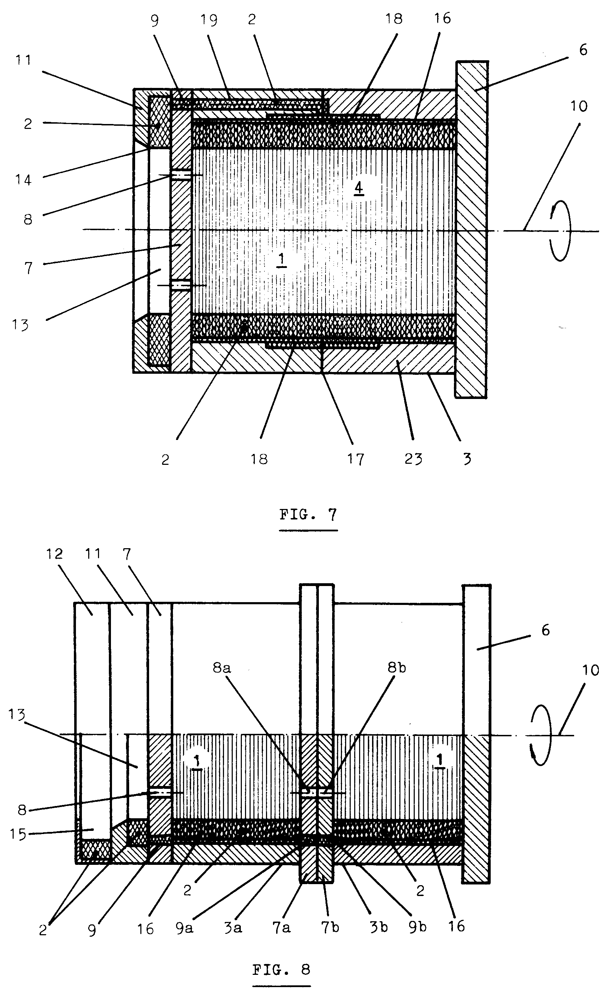

In Figur 7 ist eine Ausgestaltungsform der Gießform 3 für besonders lange Hohlfadenmodule im Längsschnitt dargestellt. Zur Vereinfachung wurden hierbei die Einfülleitung (5) und der äußere Deckel (12) weggelassen. Alle übrigen Teile entsprechen gemäß ihrer Positionszahl den in den vorangegangenen Figuren dargestellten und bereits zuvor beschriebenen Teilen. Diese Gießform 3 ist in der Mitte teilbar, was durch die Trennfuge 17 angedeutet ist. Zu beiden Seiten der Trennfuge 17 erstreckt sich ein in sich geschlossener an der Innenfläche des Mantels 23 der Gießform 3 angeordneter Ringkanal 18, dessen Breite etwa ein Drittel der Länge der Gießform 3 beträgt. Zu diesem Ringkanal 18 führt wenigstens ein Zuführkanal 19, der über die Öffnung 9 mit Vergußmasse 2 beaufschlagt wird. Auch diese Gießform 3 kann wie die in den Figuren 4 bis 6 dargestellte Gießform 3 mit in Längsrichtung verlaufenden Kanälen (16) ausgestattet sein, in die der Ringkanal 18 mündet. Die in Figur 7 dargestellte Auführungsform 3 der Gießform gestattet eine gleichmäßige Beaufschlagung der Gießform 3 mit Vergußmasse 2 von der Mitte (17) aus zu beiden Stirnseiten (Enden) der Gießform 3.

In Figur 8 ist teilweise im Längsschnitt eine Ausführungsform einer Doppelgießform 3a; 3b dargestellt, mit welcher zwei Hohlfadenmodule in einem Arbeitsgang hergestellt werden können. Zum Einschleudern von mehr als zwei Hohlfadenpaketen läßt sich diese Ausführungsform beliebig vervielfachen. Die Abgrenzung zwischen der Gießform 3a und der Gießform 3b erfolgt über die beiden Platten 7a und 7b, die die Öffnungen 8a und 9a bzw. 8b und 9b aufweisen, die den Öffnungen 8 und 9 der Platte 7 in den Figuren 3 bis 7 entsprechen und dieselbe Funktion wie diese haben, nämlich Entlüftung (8a und 8b) und Vergußmassezuführung (9a und 9b). Im übrigen funkioniert diese aus zwei Gießformen 3a und 3b zusammengesetzte Gießform wie die zuvor dargestellten und beschriebenen. Auch diese Gießformen 3a und 3b können mit Kanälen 16 ausgestattet sein. Auch bei dieser Darstellung wurde die Einfülleitung (5) weggelassen.

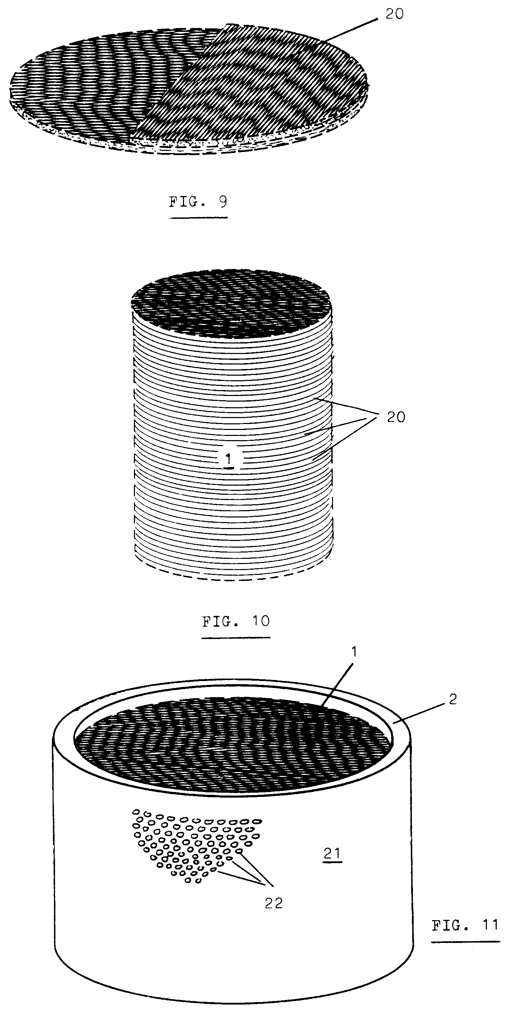

In vereinfachter perspektivischer Darstellungsweise zeigt Figur 9 ein Hohlfadenmattensegment 20 mit kreisförmigem Querschnitt, Figur 10 einen Hohlfadenstapel 1 aus einer Vielzahl übereinander angeordneter (gestapelter) Hohlfadenmattensegmente 20 nach Figur 9 und Figur 11 einen Hohlfadenmodul 21, hergestellt durch Einbetten der Hohlfadenendbereiche eines Hohlfadenstapels 1 gemäß Figur 10 in eine Vergußmasse 2 nach dem erfindungsgemäßen Verfahren. Durch die Positionszahl 22 sind die an der äußeren Umfangsfläche des Vergußmassekörpers 2 ausmündenden offenen Hohlfadenenden bezeichnet. Zur Vereinfachung wurde nur ein Teil aller offenen Hohlfadenenden 22 dargestellt. Die Länge des Hohlfadenmoduls 21, die in Figur 11 etwa nur dem Durchmesser des Hohlfadenmoduls 21 entspricht, kann ein Vielfaches des Moduldurchmessers und sogar einige Meter betragen und dabei einstückig sein, das heißt erfindungsgemäß in einem Arbeitsgang hergestellt worden sein und nicht aus einer Vielzahl von ringförmigen kürzeren Hohlfadenmodulen zusammengesetzt sein.

In Figur 12 ist in perspektivischer Darstellungsweise ein scheibenförmig ausgebildetes Hohlfadenpaket (Hohlfäden mit Vergußmassekörper) dargestellt. Die Hohlfäden 2 sind in Ebenen angeordnet die im wesentlichen senkrecht zur Durchströmungsrichtung 4 und somit senkrecht zur Längsachse des Durchströmungskanals, mithin parallel zueinander, liegen, wobei die Hohlfäden 2 in jeder Ebene im wesentlichen parallel zueinander angeordnet sind. Der Vergußmassekörper 1, in welchen die Endbereiche der Hohlfäden 2 eingebettet sind, ist hierbei ringförmig ausgebildet und bildet den Durchströmungskanal für das flüssige Medium, durch welchen die nicht eingebetteten mittleren Bereiche der Hohlfäden 2 geführt sind. Andeutungsweise ist ebenfalls dargestellt, daß alle Hohlfäden 2 auf der äußeren Mantelfläche (Umfangsfläche) 3 des Vergußmassekörpers 1 ausmünden. Derartige Ausmündungen befinden sich auf der gesamten Umfangsfläche 3 des Vergußmassekörpers 1, da die Hohlfäden 2 an ihren beiden Enden offen sind. Die Hohlfäden 2 haben zu den unmittelbar benachbarten in derselben Ebene angeordneten Hohlfäden 2 einen seitlichen Abstand. Darüber hinaus weist dieser in Figur 12 dargestellte Gegenstand auch noch die übrigen Merkmale gemäß Anspruch 15 auf. Die Durchströmungsrichtung für das flüssige Medium ist durch die Pfeile 4 angezeigt, sie kann auch umgekehrt gerichtet sein. Die Durchströmungsrichtung für das gasförmige Medium ist durch die Pfeile 5 angezeigt, sie kann auch umgekehrt gerichtet sein.

Hergestellt werden kann dieses Hohlfadenpaket beispielsweise durch Ausstanzen von runden Segmenten aus einer beispielsweise in mehreren Schichten übereinander abgelegten (abgetafelten) Hohlfadenmatte, übereinanderstapeln der Segmente bzw. Segmentblöcke, wobei das jeweils nachfolgende Segment bzw. der nachfolgende Segmentblock gegenüber dem jeweils vorhergehenden Segment bzw. Segmentblock um einen bestimmten Winkel verdreht wird, Einbetten der Endbereiche der Hohlfäden 2 in eine aushärtbare Vergußmasse 1 und Abtragen eines Teils der erhärteten Vergußmasse 1 zum Freilegen der Lumen der Hohlfäden 2. Die Herstellung kann jedoch auch so erfolgen, wie in der bereits oben zitierten deutschen Patentanmeldung P 40 05 132.3-44 beschrieben. Dies gilt im übrigen auch für die nachfolgend beschriebenen Ausführungsformen der Vorrichtung.

Wie die Figur 12 darüber hinaus zeigt, haben bei dieser Ausführungsform, bei welcher sowohl das Hohlfadenpaket als auch der Durchströmungskanal einen runden Querschnitt aufweisen, die Hohlfäden 2 jeder Ebene sowohl unterschiedliche absolute als auch unterschiedliche für die Stoffübertragung wirksame Längen. Die Hohlfäden 2, die in der Mitte des Strömungskanals angeordnet sind, haben dabei die größte Länge, während die Hohlfäden 2, die am Rand des Strömungskanals angeordnet sind, die kleinste Länge aufweisen. Die kürzeren Hohlfäden 2 haben somit auch eine kleinere für die Stoffübertragung wirksame Länge als die längeren Hohlfäden 2. Die kürzeren Hohlfäden 2 stellen - gleicher Hohlfadeninnendurchmesser vorausgesetzt - für das hindurchströmende gasförmige Medium einen geringeren Strömungswiderstand dar als die längeren Hohlfäden 2. Hierdurch erfolgt eine ungleichmäßige Beaufschlagung der unterschiedlich langen Hohlfäden 2 mit gasförmigem Medium, da durch die kürzeren Hohlfäden 2 mehr gasförmiges Medium strömt als durch die längeren Hohlfäden 2. Unterschiedliche für die Stoffübertragung wirksame Längen und unterschiedliche Beaufschlagung mit gasförmigem Medium können zu einer ungleichmäßigen Stoffübertragung führen, die störend, in anderen Fällen aber auch unbedeutend oder sogar gewollt sein kann.

In den Figuren 12 - 16 bezeichnen gleiche Positionszahlen gleiche Teile. Auf eine wiederholte Beschreibung bzw. Erwähnung bereits beschriebener bzw. erwähnter Teile wird daher nachfolgend zum Teil verzichtet, soweit sie entbehrlich erscheint.

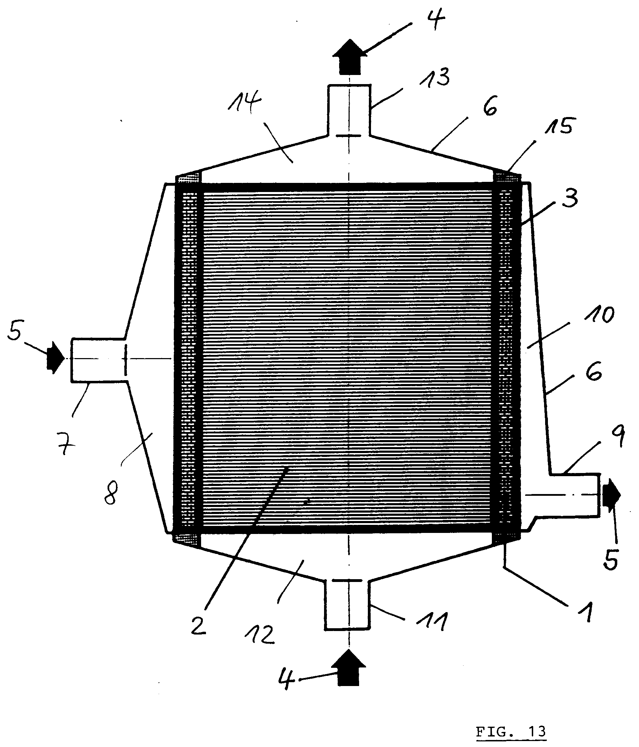

In Figur 13 ist eine in einem Gehäuse 6 angeordnete Vorrichtung im Längsschnitt dargestellt. Der Vergußmassekörper 1 ist hierbei rohrförmig, also nicht ringförmig, ausgebildet. Diese Darstellung im Längsschnitt ergibt sich gleichermaßen für einen Durchströmungskanal bzw. ein Hohlfadenpaket mit rundem, rechteckigem oder quadratischem Querschnitt in beliebiger Kombination. Das Gehäuse 6 weist den Einlaß 7 für das gasförmige Medium, der in die Verteilerkammer 8 für das gasförmige Medium mündet, die Sammelkammer 10 mit dem Auslaß 9 für das aus der Verteilerkammer 8 durch die Hohlfäden 2 strömende gasförmige Medium sowie den Einlaß 11 für das flüssige Medium, der in die Verteilerkammer 12 für das flüssige Medium mündet, sowie die Sammelkammer 14 mit dem Auslaß 13 für das aus der Verteilerkammer 12 um die Außenflächen der Hohlfäden 2 strömende flüssige Medium auf. Durch die Dichtungen 15 werden die Kammern 8 und 10 für das gasförmige Medium gegenüber den Kammern 12 und 14 für das flüssige Medium abgedichtet. Die Strömungsrichtung für das flüssige und/oder das gasförmige Medium kann auch umgekehrt sein. Auch die Anordnung der Ein- und Auslässe 7, 9, 11 und 13 kann an einer anderen Stelle der jeweiligen Kammern 8, 10, 12 bzw. 14 erfolgen.

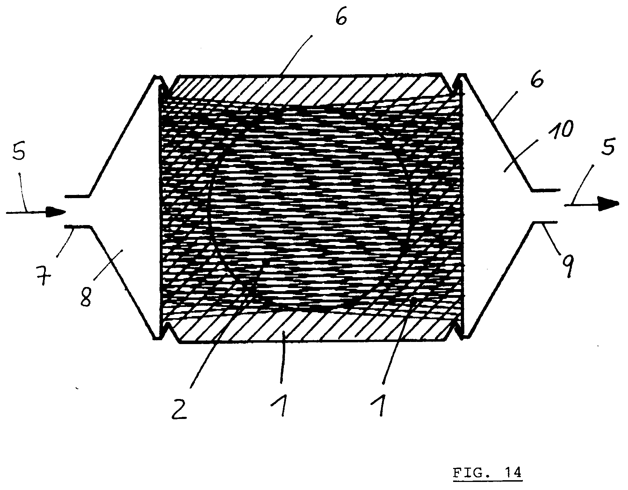

In Figur 14 ist eine in dem Gehäuse 6 angeordnete Vorrichtung im Querschnitt dargestellt. Diese Darstellung im Querschnitt ergibt sich gleichermaßen für eine sehr flache, beispielsweise scheibenförmige, Ausführungsform wie auch für eine langgestreckte Ausführungsform der Vorrichtung. Bei dieser Ausführungsform hat das Hohlfadenpaket einen rechteckigen und der Durchströmungskanal einen runden Querschnitt. Die Strömungsrichtung für das die Hohlfäden 2 außen umströmende flüssige Medium ist hierbei senkrecht zur Bildebene. Die Strömungsrichtung für das gasförmige Medium und die übrigen Teile ergeben sich aufgrund der Positionszahlen und der Beschreibung der Figuren 12 und 13 entsprechend von selbst. Wie die Figur 14 darüberhinaus deutlich zeigt, kreuzen sich hierbei die Hohlfäden 2 benachbarter Ebenen in einem kleinen Winkel. Außerdem sind alle Hohlfäden 2 hierbei im wesentlichen gleich lang, sie sind jedoch in jeder einzelnen Ebene betrachtet in einem unterschiedlich langen Endbereich eingegossen und weisen somit unterschiedlich lange, für die Stoffübertragung wirksame Abschnitte (Bereiche), in denen die Hohlfäden 2 nicht eingegossen sind, auf. Die durch die Mitte des Durchströmungskanals verlaufenden Hohlfäden 2 haben dabei den längsten für die Stoffübertragung wirksamen Abschnitt, während die seitlich angeordneten Hohlfäden 2 den kürzesten wirksamen Abschnitt aufweisen.

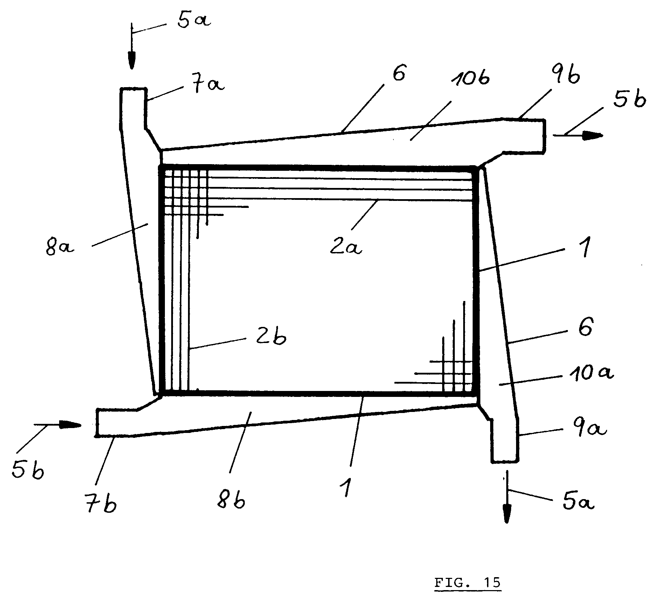

In Figur 15 ist eine Ausführungsform der Vorrichtung, bei welcher sowohl das Hohlfadenpaket als auch der Durchströmungskanal einen rechteckigen Querschnitt aufweisen, im Querschnitt dargestellt. Diese Darstellung ergibt sich gleichermaßen für eine Vorrichtung, bei welcher der Vergußmassekörper 1 ringförmig, wie für eine solche, bei welcher der Vergußmassekörper 1 rohrförmig ausgebildet ist. Die Strömungsrichtung für das die Hohlfäden 2 außen umströmende flüssige Medium ist hierbei senkrecht zur Bildebene. Bei dieser Ausführungsform sind zwei Arten von Hohlfäden 2a und 2b, die sich im wesentlichen im rechten Winkel (90°) kreuzen, in unterschiedlichen Ebenen angeordnet. Für jede Art der Hohlfäden 2a; 2b sind eigene Verteiler- und Sammelkammern vorgesehen, und zwar für die Hohlfäden 2a die Verteilerkammer 8a mit dem Einlaß 7a und die Sammelkammer 10a mit dem Auslaß 9a und für die Hohlfäden 2b die Verteilerkammer 8b mit dem Einlaß 7b und die Sammelkammer 10b mit dem Auslaß 9b. Auf diese Weise können die Hohlfäden 2a; 2b mit unterschiedlichen gasförmigen und/oder flüssigen Medien beaufschlagt, d.h. durchströmt werden. So kann beispielsweise eine Sauerstoffzufuhr zu einer die Hohlfäden 2a und 2b außen umströmenden Flüssigkeit mit Hilfe eines die Hohlfäden 2a durchströmenden Mediums erfolgen bei gleichzeitiger Temperierung die Flüssigkeit durch Wärmezu- oder -abfuhr mit Hilfe eines Wärmeträgers, der durch die Hohlfäden 2b strömt. Bei dieser Ausführungsform haben also alle Hohlfäden 2, die in dieselbe Richtung verlaufen, im wesentlichen die gleiche Länge, d.h. alle Hohlfäden 2a haben im wesentlichen die gleiche Länge und alle Hohlfäden 2b haben im wesentlichen die gleiche Länge, die Hohlfäden 2a haben jedoch eine größere sowohl absolute als auch für die Stoffübertragung wirksame Länge als die Hohlfäden 2b. Die Hohlfäden 2a; 2b sind gleichmäßig über den Strömungskanal verteilt, in der Fig. 15 sind zur Vereinfachung jedoch nur einzelne Hohlfäden 2a bzw. 2b dargestellt.

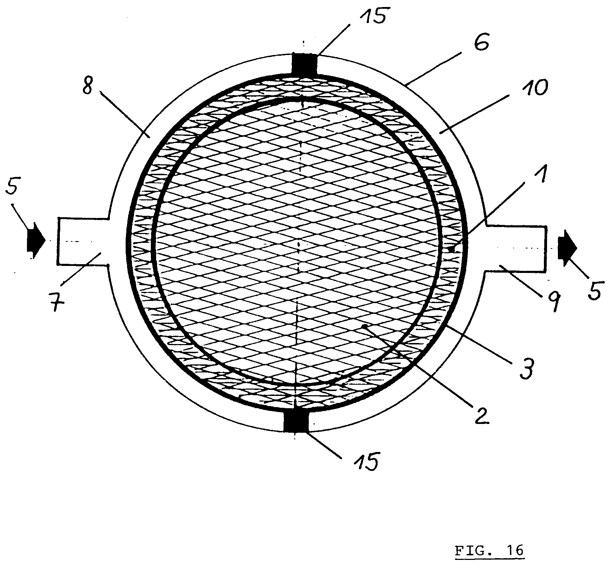

In Figur 16 ist eine Ausführungsform der Vorrichtung, bei welcher das Hohlfadenpaket und der Durchströmungskanal einen runden Querschnitt aufweisen und die in einem Gehäuse 6 mit rundem Querschnitt angeordnet ist, im Querschnitt dargestellt. Der Vergußmassekörper 1 kann hierbei kreisringförmig oder kreisrohrförmig ausgebildet sein, es kann sich hierbei also um eine Vorrichtung handeln, wie sie in Fig. 12 dargestellt ist. Zwischen dem Hohlfadenpaket, d.h. der Umfangsfläche 3 des Vergußmassekörpers 1 und dem Gehäuse 6 befindet sich ein Kanal mit kreisringförmigem Querschnitt, der durch die beiden in Längsrichtung der Vorrichtung, also senkrecht zur Bildebene, verlaufenden Dichtungen 15 oder dichtende Trennwände in zwei Kammern 8 und 10 mit halbringförmigem Querschnitt mit dem Einlaß 7 bzw. dem Auslaß 9 für das die Hohlfäden durchströmende gasförmige Medium unterteilt ist. Die Strömungsrichtung für das die Hohlfäden 2 außen umströmende flüssige Medium ist hierbei senkrecht zur Bildebene. Wie die Figur 16 darüber hinaus deutlich zeigt, haben hierbei die Hohlfäden 2 jeder Ebene sowohl unterschiedliche absolute Längen als auch unterschiedlich lange für die Stoffübertragung wirksame Abschnitte. Das heißt ein kurzer Hohlfaden 2 hat auch einen kürzeren für die Stoffübertragung wirksamen Abschnitt als ein längerer Hohlfaden 2, die kürzeren Hohlfäden 2 haben jedoch einen geringeren Strömungswiderstand als die längeren Hohlfäden 2.

## Patentansprüche

1. Verfahren zum Herstellen von Hohlfadenmodulen, bei welchen die Hohlfäden in Schichten, d.h. in im wesentlichen äquidistant zueinander verlaufenden Flächen, insbesondere in im wesentlichen parallel zueinander verlaufenden Ebenen angeordnet sind, die Hohlfäden jeder Fläche bzw. Ebene, also jeder Schicht, im wesentlichen parallel zueinander und zumindest zum Teil in gegenseitigen Abständen angeordnet sind, die Hohlfadenenden am Umfang der Flächen bzw. Ebenen angeordnet sind, die Hohlfäden benachbarter Flächen bzw. Ebenen (Schichten) sich kreuzen und die Flächen bzw. Ebenen (Schichten) im wesentlichen senkrecht zur Längsachse des Moduls angeordnet sind, durch Anordnen einer Vielzahl von Hohlfadenschichten übereinander oder nebeneinander zur Bildung eines Hohlfadenpaketes und Einbetten der Hohlfadenendbereiche in eine zunächst fließfähige später hart werdende Einbettmasse durch Drehen des Hohlfadenpaketes um seine Längsachse, dadurch gekennzeichnet, daß die Längsachse (Drehachse) des Hohlfadenpaketes während des Einbringens der Einbettmasse und bis zum Erhärten der Einbettmasse im wesentlichen horizontal angeordnet wird.

2. Verfahren nach Anspruch 1, dadurch gekennzeichnet, daß das Hohlfadenpaket vor dem Einbringen der Einbettmasse in einer den Abmessungen des Hohlfadenpaketes entsprechend bemessenen Einbettform (Gießform) angeordnet wird.

3. Verfahren nach Anspruch 1 und/oder 2, dadurch gekennzeichnet, daß die Einbettmasse im Umfangsbereich des Hohlfadenpaketes eingebracht wird.

4. Verfahren nach wenigstens einem der Ansprüche 2 bis 3, dadurch gekennzeichnet, daß die Einbettmasse durch Kanäle in der Einbettform (Gießform) eingebracht wird.

5. Verfahren nach wenigstens einem der Ansprüche 1 bis 4, dadurch gekennzeichnet, daß die Einbettmasse an einer Stirnseite des Hohlfadenpakets eingebracht wird.

6. Verfahren nach wenigstens einem der Ansprüche 1 bis 4, dadurch gekennzeichnet, daß die Einbettmasse im Bereich der halben Länge des Hohlfadenpakets eingebracht wird.

7. Verfahren nach wenigstens einem der Ansprüche 1 bis 6, dadurch gekennzeichnet, daß zwei oder mehr Hohlfadenpakete in getrennten Gießformen auf einer gemeinsamen Drehachse angeordnet werden, so daß auf diese Weise zwei oder mehr Hohlfadenmodule in einem Arbeitsgang gleichzeitig hergestellt werden.

8. Vorrichtung zum Durchführen des Verfahrens nach den Ansprüchen 1 bis 7 bestehend aus einer Zuführeinrichtung (5) zum Zuführen der Vergußmasse (2) und einer Gießform (3) zur Aufnahme wenigstens eines Hohlfadenpaketes (1), die gebildet wird aus einem Mantel (23) und zwei Stirnplatten (6; 7), von denen wenigstens eine abnehmbar ist und wenigstens eine im Bereich des inneren Umfangs des Mantels (23) wenigstens eine Öffnung (9) zum Zuführen der Vergußmasse (2) und wenigstens eine Entlüftungsöffnung (8) aufweist, bei welcher die Gießform (3) um ihre Längsachse (10) drehbar und mit einer Antriebseinrichtung antreibbar angeordnet und die Längsachse (Drehachse) (10) im wesentlichen horizontal angeordnet ist.

9. Vorrichtung nach Anspruch 8, gekennzeichnet durch einen koaxial mit der Gießform angeordneten ringförmigen inneren Deckel (11), der mit der Stirnplatte (7), welche die Zuführöffnung (9) für die Vergußmasse (2) aufweist, einen ringförmigen Hohlraum (13) bildet, der als Verteilerkammer für die Vergußmasse (2) zur Beaufschlagung der Zuführöffnung(en) (9) dient.

10. Vorrichtung nach Anspruch 9, dadurch gekennzeichnet, daß der ringförmige Deckel (11) einen Überlaufrand (14) aufweist, dessen Durchmesser dem Soll-Innendurchmesser des zu bildenden Vergußmassekörpers (2) entspricht.

11. Vorrichtung nach Anspruch 9 und/oder 10 gekennzeichnet durch einen koaxial zu der Gießform (3) angeordneten äußeren ringförmigen Deckel (12), der mit dem inneren Deckel (11) einen Ringraum (15) zur Aufnahme von überschüssiger Vergußmasse (2) bildet.

12. Vorrichtung nach wenigstens einem der Ansprüche 8 bis 11 gekennzeichnet durch an der Innenfläche des Mantels (23) der Gießform (3) angeordnete in Längsrichtung verlaufende nutenförmige Kanäle 16 zur besseren Verteilung der Vergußmasse (2).

13. Vorrichtung nach wenigstens einem der Ansprüche 8 bis 12 gekennzeichnet durch wenigstens zwei auf einer gemeinsamen Drehachse (10) angeordnete Gießformen (3a; 3b), mit welcher wenigstens zwei Hohlfadenmodule (21) in einem Arbeitsgang gleichzeitig hergestellt werden können.

14. Vorrichtung nach wenigstens einem der Ansprüche 8 bis 13 gekennzeichnet durch einen, oder bei besonders langen Modulen mehrere, an der Innenfläche des Mantels (23) der Gießform (3) angeordnete Verteilersysteme (18) für die Vergußmasse (2) zu welchen wenigstens je ein Zuführkanal (19) führt, der mit einer Öffnung (9) zur Beaufschlagung mit Vergußmasse (2) verbunden ist, zur gleichmäßigen Beaufschlagung der Gießform (3) mit Vergußmasse (2) radial von außen.

15. Vorrichtung - herstellbar nach Anspruch 1 bis 14 - zur Stoffübertragung von einem gasförmigen Medium auf ein flüssiges Medium und/oder umgekehrt durch die gasdurchlässige Wand von Hohlfäden (2), bei welcher das gasförmige Medium die Hohlfäden (2) innen durchströmt und das flüssige Medium die Hohlfäden (2) außen umströmt und die Endbereiche der Hohlfäden (2) in einem Vergußmassekörper (1) eingebettet sind, der eine fluiddichte Trennwand zwischen dem gasförmigen und dem flüssigen Medium bildet, dadurch gekennzeichnet, daß der Vergußmassekörper (1) ring- oder rohrförmig ausgebildet ist und den Durchströmungskanal für das flüssige Medium bildet, daß die Hohlfäden (2) innerhalb dieses Durchströmungskanals in im wesentlichen parallel zueinander liegenden Ebenen angeordnet sind, die im wesentlichen senkrecht zur Durchströmungsrichtung (4), d.h. zur Längsachse des Durchströmungskanals, liegen, daß die Hohlfäden (2) jeder Ebene im wesentlichen geradlinig ausgebildet und parallel zueinander und zumindest zum Teil in Abständen voneinander angeordnet sind, daß die Hohlfäden (2) benachbarter Ebenen sich kreuzen und daß die an ihren beiden Enden offenen Hohlfäden (2) auf der äußeren Mantelfläche (Umfangsfläche) (3) des Vergußmassekörpers (1) ausmünden.

16. Vorrichtung nach Anspruch 15, dadurch gekennzeichnet, daß die Hohlfäden (2) eine poröse, insbesondere mikroporöse, Wand aufweisen.

17. Vorrichtung nach Anspruch 15 oder 16, gekennzeichnet durch die Oxygenation des flüssigen Mediums bewirkende Hohlfäden (2).

18. Vorrichtung nach wenigstens einem der Ansprüche 15 bis 17, dadurch gekennzeichnet, daß die Hohlfäden (2) an der Außen- und/oder Innenfläche und/oder ggf. in den Poren ihrer Wand immobilisierte bioaktive Substanzen aufweisen.

19. Vorrichtung nach wenigstens einem der Ansprüche 15 bis 18, dadurch gekennzeichnet, daß die Hohlfäden (2) adsorptive Eigenschaften aufweisen.

20. Vorrichtung nach wenigstens einem der Ansprüche 15 bis 19, dadurch gekennzeichnet, daß die Hohlfäden (2) durch - ggf. maschenbildende - Fäden miteinander verbunden und/oder gehalten werden.

21. Vorrichtung nach wenigstens einem der Ansprüche 15 bis 20, dadurch gekennzeichnet, daß das Verhältnis von Länge bzw. Höhe des Vergußmassekörpers (1) zu hydraulischem Innendurchmesser des Durchströmungskanals im Bereich von 0,3 bis 100 liegt, wobei der hydraulische Innendurchmesser des Durchströmungskanals definiert ist als das Verhältnis von 4 F zu U, wobei F die Querschnittsfläche ohne Hohlfäden (2) und U der Umfang des Strömungskanals ist.

22. Vorrichtung nach wenigstens einem der Ansprüche 15 bis 21, dadurch gekennzeichnet, daß der hydraulische Innendurchmesser des Durchströmungskanals im Bereich von 10 mm bis 300 mm liegt.

23. Vorrichtung nach wenigstens einem der Ansprüche 15 bis 22, dadurch gekennzeichnet, daß 10% bis 80% der freien Querschnittsfläche des Durchströmungskanals mit Hohlfäden (2) belegt sind.

24. Vorrichtung nach wenigstens einem der Ansprüche 15 bis 23, dadurch gekennzeichnet, daß das Hohlfadenpaket (= Hohlfäden (2) mit Vergußmassekörper (1)) einen runden Querschnitt aufweist.

25. Vorrichtung nach wenigstens einem der Ansprüche 15 bis 23, dadurch gekennzeichnet, daß das Hohlfadenpaket (1; 2) einen rechteckigen Querschnitt aufweist.

26. Vorrichtung nach wenigstens einem der Ansprüche 15 bis 25, dadurch gekennzeichnet, daß der Durchströmungskanal einen runden Querschnitt aufweist.

27. Vorrichtung nach wenigstens einem der Ansprüche 15 bis 25, dadurch gekennzeichnet, daß der Durchströmungskanal einen rechteckigen Querschnitt aufweist.

28. Vorrichtung nach wenigstens einem der Ansprüche 15 bis 23, 25 oder 26, dadurch gekennzeichnet, daß das Hohlfadenpaket (1; 2) einen rechteckigen, insbesondere quadratischen, Querschnitt und der Durchströmungskanal einen runden Querschnitt aufweist, daß sich die Hohlfäden (2) benachbarter Ebenen im wesentlichen im rechten Winkel (90°) kreuzen und die Hohlfäden (2) jeweils im wesentlichen parallel zu denjenigen beiden Seiten des Vergußmassekörpers (1) verlaufen, an denen ihre beiden offenen Enden nicht ausmünden (Figur 15).

29. Vorrichtung nach wenigstens einem der Ansprüche 15 bis 23, 25 oder 26, dadurch gekennzeichnet, daß das Hohlfadenpaket einen rechteckigen Querschnitt und der Durchströmungskanal einen runden Querschnitt aufweist, daß sich die Hohlfäden (2) benachbarter Ebenen unter einem kleinen Winkel kreuzen und daß die Hohlfäden (2) mit ihren offenen Enden nur an zwei sich gegenüberliegenden im wesentlichen parallel zueinander verlaufenden Seiten des Vergußmassekörpers (1) ausmünden (Figur 14).

30. Vorrichtung nach wenigstens einem der Ansprüche 15 bis 29, dadurch gekennzeichnet, daß das Hohlfadenpaket in einem Gehäuse (6) angeordnet ist, welches für das gasförmige Medium einen Einlaß (7), der in eine Verteilerkammer (8) mündet, und eine Sammelkammer (10) mit einem Auslaß (9) und für das flüssige Medium einen Einlaß (11), der in eine Verteilerkammer (12) mündet, und eine Sammelkammer (14) mit einem Auslaß (13) aufweist (Figur 13).

31. Vorrichtung nach wenigstens einem der Ansprüche 15 bis 29, dadurch gekennzeichnet, daß zwei unterschiedliche Arten von Hohlfäden (2a; 2b) in unterschiedlichen Ebenen angeordnet sind, daß die Hohlfäden der ersten Art (2a) zu den Hohlfäden der zweiten Art (2b) im wesentlichen im rechten Winkel angeordnet sind, daß für das durch die Hohlfäden der ersten Art (2a) strömende Medium eine Verteilerkammer (8a) mit einem Einlaß (7a) und eine Sammelkammer (10a) mit einem Auslaß (9a) angeordnet sind und daß für das durch die Hohlfäden der zweiten Art (2b) strömende Medium eine Verteilerkammer (8b) mit einem Einlaß (7b) und eine Sammelkammer (10b) mit einem Auslaß (9b) angeordnet sind (Figur 15).

32. Vorrichtung nach wenigstens einem der Ansprüche 15 bis 24 oder 26, dadurch gekennzeichnet, daß das Hohlfadenpaket (1; 2) und der Durchströmungskanal einen runden Querschnitt aufweisen, daß der Durchströmungskanal koaxial zum Hohlfadenpaket (1; 2) eingeordnet ist, daß das Hohlfadenpaket (1; 2) koaxial in einem Gehäuse (6) mit rundem Querschnitt angeordnet ist, daß zwischen der Umfangsfläche (3) des Vergußmassekörpers (1) und dem Gehäuse (6) ein Kanal mit kreisringsförmigem Querschnitt gebildet wird, daß der Kanal durch zwei in Längsrichtung der Vorrichtung verlaufende Dichtungen (15) o.dgl. in zwei Kammern (8; 10) mit halbringförmigem Querschnitt unterteilt ist, daß in die eine Kammer (8) ein Ein- bzw. Auslaß (7) und in die andere Kammer (10) ein Aus- bzw. Einlaß (9) für das die Hohlfäden (2) durchströmende gasförmige Medium mündet (Figur 16).

33. Vorrichtung nach wenigstens einem der Ansprüche 15 bis 32, dadurch gekennzeichnet, daß die Hohlfäden (2) derart angeordnet sind, daß sich alle Hohlfäden (2) aller benachbarten Ebenen berühren.

34. Vorrichtung nach wenigstens einem der Ansprüche 15 bis 33, dadurch gekennzeichnet, daß sie ein Blutoxygenator ist.

35. Vorrichtung nach wenigstens einem der Ansprüche 15 bis 33, dadurch gekennzeichnet, daß sie ein Bioreaktor ist.
